# EUROPEAN PATENT APPLICATION

(11) **EP 3 456 455 A1**
(43) Date of publication of application: **20.03.2019**
(21) Application number: 18193410.0
(22) Date of filing: 10.09.2018
(51) Int. Cl.: B23H 7/10

(54) **AUTO WIRE FEEDING METHOD AND WIRE ELECTRICAL DISCHARGE MACHINE**

(30) Priority: 13.09.2017 JP 2017175317
(71) Applicant: FANUC CORPORATION, Oshino-mura Minamitsuru-gun Yamanashi 401-0597 (JP)
(72) Inventor: MAKINO, Yoshinori, Yamanashi, 401-0597 (JP); KADOKURA, Hiromitsu, Yamanashi, 401-0597 (JP)
(74) Representative: Keil & Schaafhausen Patent- und Rechtsanwälte PartGmbB

(57) **Abstract**

A wire electrical discharge machine (10) includes a contact detector (76) provided at a lower nozzle (32) and configured to detect contact of a wire electrode (12) with the exterior of the lower nozzle (32), a suction unit (38) configured to suction working fluid into the lower nozzle (32), and a wire feeding mechanism (45) configured to pass the wire electrode (12) through a machining hole in a workpiece (14) and feed the wire electrode (12) toward the lower nozzle (32). When auto wire feeding is performed with a work-pan (20) containing working fluid, the wire electrode (12) is fed toward the lower nozzle (32) by the wire feeding mechanism (45) while the suction unit (38) suctions the working fluid into the lower nozzle (32). When the contact detector (76) detects contact of the wire electrode (12) with the exterior of the lower nozzle (32), the wire electrode (12) is rewound by the wire feeding mechanism (45) .

## Description

### BACKGROUND OF THE INVENTION

### Field of the Invention:

The present invention relates to an auto wire feeding method for automatically feeding a wire electrode, as well as relating to a wire electrical discharge machine. Description of the Related Art:
Japanese Laid-Open Patent Publication No. 58-177234 discloses an auto wire feeding method in a wire electrical discharge machine, in which a wire electrode from a wire electrode supply unit is threaded into a machining start hole of a workpiece, and fed to and engaged with the wire electrode collecting unit, whereas when the wire electrode fails to be engaged with the wire electrode collecting unit, the wire electrode is automatically rewound and returned to the initial state.

### SUMMARY OF THE INVENTION

In the technology disclosed in Japanese Laid-Open Patent Publication No. 58-177234, since the wire electrode is rewound and returned to the initial state every time the wire electrode feeding fails, there is a problem that it takes a long time to complete the wire electrode feeding.

The present invention has been devised to solve the above problem, and it is therefore an object of the present invention to provide an auto wire feeding method and a wire electrical discharge machine capable of shortening the time required for completion of auto feeding of a wire electrode and improving the success rate of auto wire feeding.

An aspect of the present invention resides in an auto wire feeding method for performing auto wire feeding of a wire electrode in a wire electrical discharge machine. The wire electrical discharge machine includes: a work-pan configured to store working fluid; a table disposed in the work-pan, a workpiece being placed on the table; a lower nozzle disposed under the table and having a nozzle hole into which the wire electrode is inserted; a contact detector disposed at the lower nozzle and configured to detect contact of the wire electrode with the exterior of the lower nozzle; a suction unit configured to suction working fluid into the lower nozzle; and a wire feeding mechanism configured to pass the wire electrode through a machining hole in the workpiece and feed the wire electrode toward the lower nozzle. The auto wire feeding method includes the steps of: when auto wire feeding is performed with the work-pan containing working fluid, feeding the wire electrode toward the lower nozzle by the wire feeding mechanism while suctioning the working fluid into the lower nozzle by the suction unit; and rewinding the wire electrode by the wire feeding mechanism when the contact detector detects contact of the wire electrode with the exterior of the lower nozzle.

According to the present invention, it is possible to shorten the time required to complete the auto wire feeding of the wire electrode.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a schematic diagram of a wire electrical discharge machine;
FIG. 2 is a flowchart showing the flow of an auto wire feeding process performed by a controller;
FIG. 3 is a flowchart showing the flow of the auto wire feeding process performed by the controller;
FIG. 4 is a graph showing the relationship between the thickness of a workpiece and the success rate of auto wire feeding;
FIG. 5 is a schematic diagram of the wire electrical discharge machine showing a state in which a tip of a wire electrode touches the exterior of a lower nozzle and the wire electrode bends;
FIG. 6 is a schematic diagram of the wire electrical discharge machine showing a state in which the tip of the wire electrode touches the exterior of the lower nozzle and the wire electrode bends;
FIG. 7 is a flowchart showing the flow of an auto wire feeding process performed by the controller;
FIG. 8 is a flowchart showing the flow of the auto wire feeding process performed by the controller; and
FIG. 9 is a flowchart showing the flow of the auto wire feeding process performed by the controller.

### DESCRIPTION OF THE PREFERRED EMBODIMENTS

### [First Embodiment]

### [Configuration of Wire Electrical Discharge Machine]

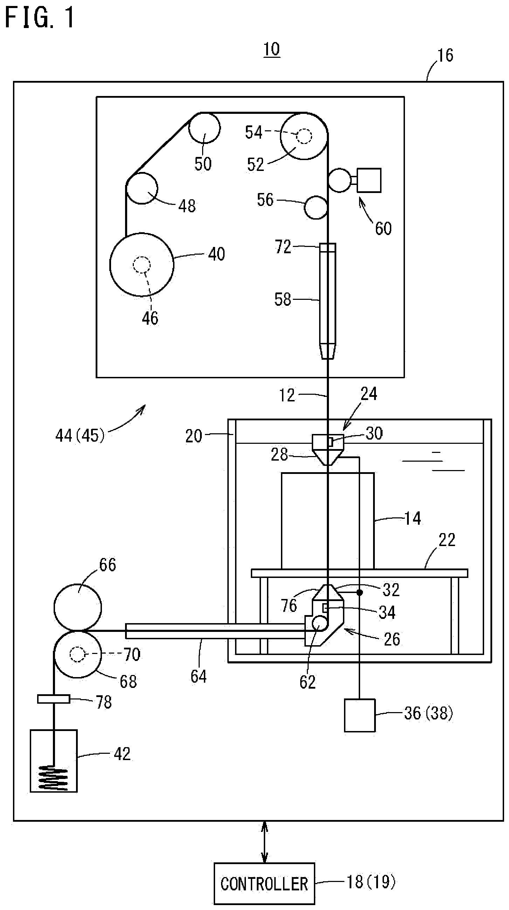

FIG. 1 is a schematic diagram of a wire electrical discharge machine 10. The wire electrical discharge machine 10 is a machine tool for performing electrical discharge machining on a workpiece 14 by applying voltage between a wire electrode 12 and the workpiece 14 to thereby generate electrical discharge. The wire electrode 12 is formed of, for example, metal material such as tungsten-based, copper-alloy based and brass-based material. On the other hand, the material of the workpiece 14 is metal material such as iron-based material or superhard material (tungsten carbide).

The wire electrical discharge machine 10, at least, includes a main machine body 16 and a controller 18. The main machine body 16 is provided with a work-pan 20 capable of storing a dielectric working fluid (hereinafter simply referred to as a working fluid) such as deionized water or oil used for electrical discharge machining on the workpiece 14. The work-pan 20 contains therein a table 22 on which the workpiece 14 is fixed. The work-pan 20 is movable on a horizontal plane by an unillustrated servo motor. As the work-pan 20 is moved, the workpiece 14 fixed on the table 22 moves relative to the wire electrode 12 accordingly. By performing electrical discharge machining on the workpiece 14 while moving the workpiece relative to the wire electrode 12, it is possible to machine the workpiece 14 into a desired shape.

The main machine body 16 has an upper wire guide 24 and a lower wire guide 26. The upper wire guide 24 is arranged above the workpiece 14, and the lower wire guide 26 is arranged under the workpiece 14. The upper wire guide 24 has an upper nozzle 28 for ejecting a working fluid through a nozzle hole thereof into which the wire electrode 12 is inserted, and an upper electrode pin 30 through which electric power is supplied to the wire electrode 12. The lower wire guide 26 has a lower nozzle 32 for suctioning and ejecting a working fluid through a nozzle hole thereof into which the wire electrode 12 is inserted, and a lower electrode pin 34 through which electric power is supplied to the wire electrode 12.

The upper nozzle 28 and the lower nozzle 32 are connected to a pump 36 which is driven under control of the controller 18. The pump 36 supplies a working fluid into the interior of the upper nozzle 28 and the lower nozzle 32 and suctions a working fluid into the lower nozzle 32. The pump 36 constitutes a suction unit 38.

The main machine body 16 has a running mechanism 44 for feeding the wire electrode 12 from a bobbin 40 through the machining hole of the workpiece 14 to a collecting box 42. The running mechanism 44 includes, in order from the upstream side in the running direction of the wire electrode 12, the bobbin 40, a guide roller 48, a guide roller 50, a brake roller 52, a guide roller 56, an auto wire feeding (AWF) pipe 58, the upper wire guide 24, the lower wire guide 26, a guide roller 62, a lower pipe 64, a pinch roller 66 and a feed roller 68. This running mechanism 44 defines a running path of the wire electrode 12. The running mechanism 44 constitutes a wire feeding mechanism 45.

The bobbin 40 is rotated by a torque applied from a motor 46 which is driven under control of the controller 18. A long wire electrode 12 is wound on the bobbin 40, and the wire electrode 12 is supplied or fed from the bobbin 40 as the bobbin 40 rotates.

The wire electrode 12 supplied from the bobbin 40 is extended on and along the guide roller 48 and the guide roller 50. The guide roller 48 and the guide roller 50 change the running direction of the wire electrode 12 fed out from the bobbin 40, and guide the wire electrode 12 toward the brake roller 52.

The brake roller 52 is rotated by a torque applied from a motor 54 which is driven under control of the controller 18. The brake roller 52 can feed the wire electrode 12 without slipping, and it is possible to apply a braking force to the wire electrode 12 by adjusting the torque applied from the motor 46 to the brake roller 52.

The wire electrode 12 sent from the brake roller 52 is extended on the guide roller 56 and then sent to the AWF pipe 58. A tension detector 60 is disposed between the brake roller 52 and the guide roller 56. The tension detector 60 is a sensor for detecting the tension of the wire electrode 12. The wire electrode 12 sent to the AWF pipe 58 passes therethrough and is sent to the upper wire guide 24. The wire electrode 12 sent to the upper wire guide 24 passes through the machining hole of the workpiece 14 and is sent to the lower wire guide 26.

The wire electrode 12 sent to the lower wire guide 26 is extended over the guide roller 62 provided in the lower wire guide 26 and then sent to the lower pipe 64. The wire electrode 12 sent to the lower pipe 64, after passing through the lower pipe 64, is sent into the collecting box 42 by the pinch roller 66 and the feed roller 68 that hold and sandwich the wire electrode 12 therebetween. The feed roller 68 is rotated by a torque applied from a motor 70 which is driven under control of the controller 18.

When the wire electrode 12 is subjected to breakage during electrical discharge machining on the workpiece 14, the running mechanism 44 automatically feeds the wire electrode 12 (auto wire feeding). Auto wire feeding is performed in a state in which the working fluid is stored in the work-pan 20. When the auto wire feeding fails, the wire electrode 12 is rewound, and the wire electrode 12 is then automatically fed again. As a sensor for detecting failures of auto wire feeding, in the present embodiment, a flexure detector 72 and a contact detector 76 are provided in the main machine body 16.

During the auto wire feeding, the tip of the wire electrode 12 travels on path segments without guiding action of the guides or the rollers. Of the segments, a segment between the upper nozzle 28 and the lower nozzle 32 is the longest. Therefore, when the wire electrode 12 is fed from the upper nozzle 28 toward the lower nozzle 32, failure of auto wire feeding tends to occur due to the tip of the wire electrode 12 deviating from the nozzle hole of the lower nozzle 32.

The flexure detector 72 is disposed between the guide roller 56 and the AWF pipe 58, and is a sensor for detecting bending of the wire electrode 12 that is caused when the tip of the wire electrode 12 deviates from the nozzle hole of the lower nozzle 32 and touches the exterior of the lower nozzle 32. The contact detector 76 is disposed on the lower nozzle 32, and is a sensor for detecting contact of the wire electrode 12 with the exterior of the lower nozzle 32.

In the present embodiment, an AWF detector 78 is provided as a sensor for detecting completion of auto wire feeding. The AWF detector 78 is disposed between the collecting box 42 and the pinch roller 66 and feed roller 68, and is a sensor for detecting arrival of the tip of the wire electrode 12 at the position of the AWF detector 78.

### [Auto Wire Feeding Process]

Next, description will be given concerning a process by the controller 18 for performing auto wire feeding while the working fluid resides in the work-pan 20 when the wire electrode 12 is subjected to breakage during electrical discharge machining on the workpiece 14. When the workpiece 14 is thick, the controller 18 controls the pump 36 and the running mechanism 44 to thereby perform auto wire feeding while suctioning the working fluid through the lower nozzle 32.

When the thickness of the workpiece 14 is 150 [mm] or more, the controller 18 determines that the workpiece 14 is thick. When the thickness of the workpiece 14 is less than 150 [mm], the controller 18 determines that the workpiece 14 is thin. The thickness of the workpiece 14 is input to the controller 18 by the operator operating an input device or the like, before the electrical discharge machining on the workpiece 14 is started. Alternatively, a thickness measuring mechanism for automatically measuring the thickness of the workpiece 14 may be provided so that the thickness of the workpiece 14 is input from the thickness measuring mechanism to the controller 18. The controller 18 constitutes an auto wire feeding control unit 19.

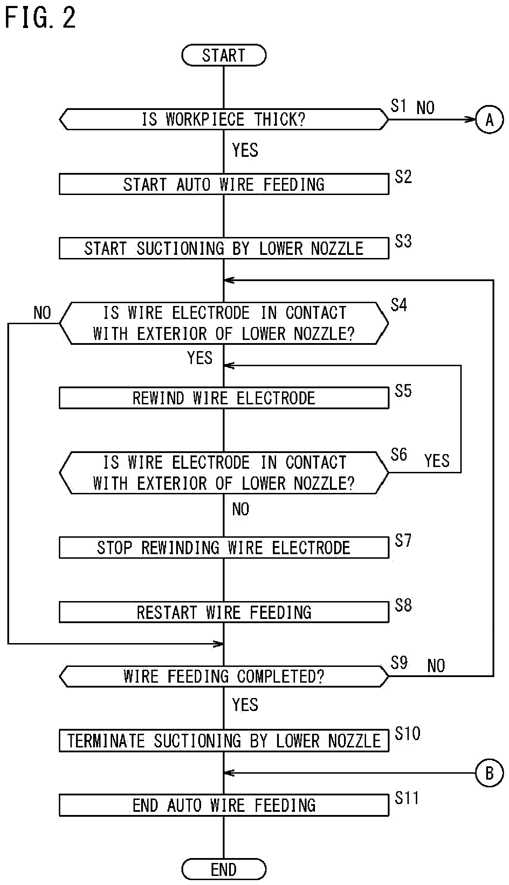

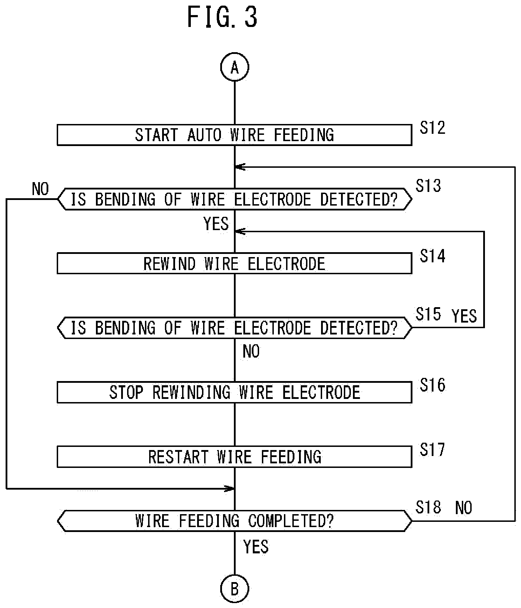

FIGS. 2 and 3 are flowcharts showing the flow of auto wire feeding process in the controller 18. At step S1, the controller 18 determines whether or not the thickness of the workpiece 14 is thick. If the workpiece 14 is thick, the control proceeds to step S2, and if the workpiece 14 is thin, the control goes to step S12.

At step S2, the controller 18 drives the motor 46, the motor 54 and the motor 70 to start auto wire feeding of the wire electrode 12, and the control proceeds to step S3. At step S3, the controller 18 drives the pump 36 to suction a working fluid through the lower nozzle 32, and the control proceeds to step S4.

At step S4, the controller 18 determines whether or not the wire electrode 12 touches the exterior of the lower nozzle 32, based on the presence or absence of a detection signal from the contact detector 76. The controller 18 determines that the auto wire feeding has failed, by receiving the detection signal from the contact detector 76. When the wire electrode 12 is in contact with the exterior of the lower nozzle 32, the control proceeds to step S5. When the wire electrode 12 is not in contact with the exterior of the lower nozzle 32, the control goes to step S9.

At step S5, the controller 18 drives the motor 46 and the motor 54 to rewind the wire electrode 12, and the control proceeds to step S6. At step S6, the controller 18 determines whether or not the wire electrode 12 is in contact with the exterior of the lower nozzle 32, based on the presence or absence of a detection signal from the contact detector 76. If the wire electrode 12 is in contact with the exterior of the lower nozzle 32, the control returns to step S5. If the wire electrode 12 is not in contact with the exterior of the lower nozzle 32, the control goes to step S7.

At step S7, the controller 18 stops the motor 46 and the motor 54 to stop rewinding the wire electrode 12, and the control proceeds to step S8. At step S8, the controller 18 drives the motor 46, the motor 54 and the motor 70 to restart the auto wire feeding of the wire electrode 12, and the control proceeds to step S9. At step S9, the controller 18 determines whether or not the auto wire feeding of the wire electrode 12 is completed, based on the presence or absence of a detection signal from the AWF detector 78. When the auto wire feeding of the wire electrode 12 is completed, the control proceeds to step S10, and when the auto wire feeding of the wire electrode 12 has not yet been completed, the control returns to step S4.

At step S10, the controller 18 stops the pump 36 to complete suctioning of a working fluid through the lower nozzle 32, and the control proceeds to step S11. At step S11, the controller 18 stops the motor 46, the motor 54 and the motor 70, terminates the auto wire feeding of the wire electrode 12, and ends the auto wire feeding process. At step S11, electrical discharge machining may be subsequently performed without stopping the motor 46, the motor 54 and the motor 70.

At step S12, the controller 18 drives the motor 46, the motor 54 and the motor 70 to start auto wire feeding of the wire electrode 12, and the control proceeds to step S13. At step S13, the controller 18 determines whether or not bending occurs in the wire electrode 12, based on the presence or absence of a detection signal from the flexure detector 72. The controller 18 determines that auto wire feeding has failed, by receiving the detection signal from the flexure detector 72. When bending occurs in the wire electrode 12, the control proceeds to step S14. When no bending is occurring in the wire electrode 12, the control goes to step S18.

At step S14, the controller 18 drives the motor 46 and the motor 54 to rewind the wire electrode 12, and the control proceeds to step S15. At step S15, the controller 18 determines whether or not bending occurs in the wire electrode 12, based on the presence or absence of a detection signal from the flexure detector 72. When bending occurs in the wire electrode 12, the control returns to step S14. When no bending is occurring in the wire electrode 12, the control goes to step S16.

At step S16, the controller 18 stops the motor 46 and the motor 54 to stop rewinding of the wire electrode 12, and the control proceeds to step S17. At step S17, the controller 18 drives the motor 46, the motor 54 and the motor 70 to restart auto wire feeding of the wire electrode 12, and the control proceeds to step S18. At step S18, the controller 18 determines whether or not the wire feeding of the wire electrode 12 is completed, based on the presence or absence of a detection signal from the AWF detector 78. When the wire feeding of the wire electrode 12 is completed, the control proceeds to step S11, and when the wire feeding of the wire electrode 12 has not yet been completed, the control returns to step S13.

It is noted that the controller 18 may be configured to determine that the workpiece 14 is thick when the thickness of the workpiece 14 is 200 [mm] or more and that the workpiece 14 is thin when the thickness of the workpiece 14 is less than 200 [mm]. Further, the controller 18 may be configured to determine that the workpiece 14 is thick when the thickness of the workpiece 14 is 250 [mm] or more and that the workpiece 14 is thin when the thickness of the workpiece 14 is less than 250 [mm]. Furthermore, the controller 18 may be configured to determine that the workpiece 14 is thick when the thickness of the workpiece 14 is 300 [mm] or more and that the workpiece 14 is thin when the thickness of the workpiece 14 is less than 300 [mm].

In the above embodiment, it is determined at step S1 whether the workpiece 14 is thick or thin, and the process of steps S2 to S9 and the process of step S12 to step S18 are executed separately, depending on the thickness. However, only the process from step S2 to step S9 may be performed regardless of the workpiece thickness.

### [Operation and Effect]

In a state that the working fluid has been discharged from the work-pan 20, the working fluid is supplied to the upper nozzle 28 by the pump 36 and then ejected from the nozzle hole of the upper nozzle 28, and the wire electrode 12 is fed. In this case, the straightness of the wire electrode 12 is enhanced so that the success rate of auto wire feeding can be improved. However, when the wire electrode 12 is broken during electrical discharge machining on the workpiece 14, if auto wire feeding is performed with the working fluid having been discharged from the work-pan 20, it is necessary to discharge and supply the working fluid before and after auto wire feeding, which takes a long time until restart of electrical discharge machining. To deal with this, in the present embodiment, auto wire feeding is performed with the work-pan 20 containing therein the working fluid, aiming at shortening the time required until restart of electrical discharge machining.

In the case where auto wire feeding is performed with the work-pan 20 containing therein the working fluid, auto wire feeding is more likely to fail than the case where auto wire feeing is performed with the working fluid emptied from the work-pan 20. This is because even if the wire electrode 12 is advanced while working fluid is ejected from the nozzle hole of the upper nozzle 28, the flow of working fluid from the nozzle hole of the upper nozzle 28 quickly slows in the working fluid, so that the straightness of the wire electrode 12 cannot be sufficiently enhanced. In addition, this is also because the wire electrode 12 easily floats due to buoyancy in the working fluid.

In the present embodiment, in order to shorten the time required for completing the auto wire feeding in the case where auto wire feeding is performed with working fluid stored in the work-pan 20, the success rate of the auto wire feeding is improved while the rewinding length of the wire electrode 12 at the time of unsuccessful auto wire feeding is shortened.

### (Improvement in Success Rate of Auto Wire Feeding)

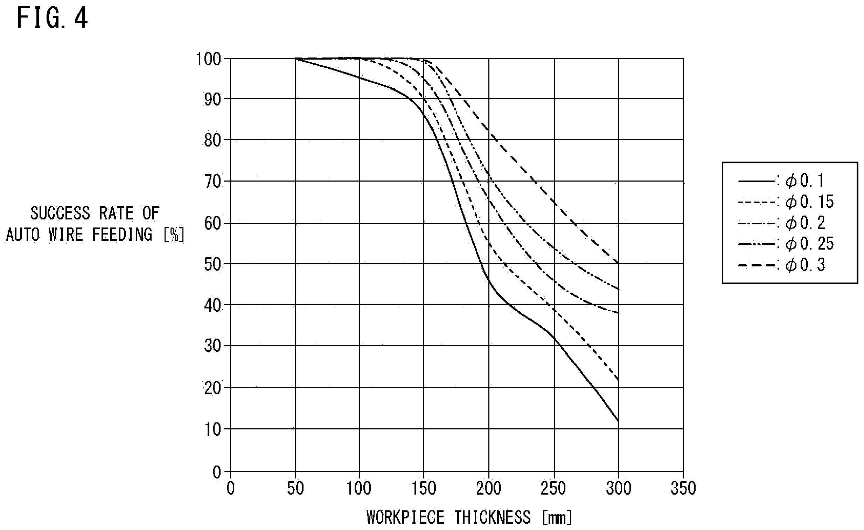

FIG. 4 is a graph showing the relationship between the thickness of the workpiece 14 and the success rate of auto wire feeding. FIG. 4 shows the success rate of auto wire feeding performed when the working fluid is stored in the work-pan 20 without any suction of working fluid from the lower nozzle 32. As shown in FIG. 4, as the thickness of the workpiece 14 becomes thicker, the distance between the upper nozzle 28 and the lower nozzle 32 becomes longer, so that the success rate of auto wire feeding decreases accordingly. Further, as the diameter of the wire electrode 12 becomes smaller, the straightness of the wire electrode 12 that is fed from the upper nozzle 28 becomes worse, so that the success rate of auto wire feeding decreases accordingly.

As shown in FIG. 4, regardless of the diameter of the wire electrode 12, when the thickness of the workpiece 14 is 150 [mm] or more, the success rate of auto wire feeding decreases, compared to when the thickness is less than 150 [mm]. Based on this, in the present embodiment, when the thickness of the workpiece 14 is 150 [mm] or more, auto wire feeding is performed while working fluid is drawn into the lower nozzle 32 by the pump 36. As a result, the tip of the wire electrode 12 sent from the upper nozzle 28 can be guided to the nozzle hole of the lower nozzle 32 along the flow of working fluid toward the nozzle hole of the lower nozzle 32, and hence the success rate of auto wire feeding can be improved.

### (Shortening of Rewinding Length of Wire Electrode)

When the thickness of the workpiece 14 is large (150 [mm] or more), cases occur where the flexure detector 72 cannot detect bending of the wire electrode 12 caused by abutment against the exterior of the lower nozzle 32.

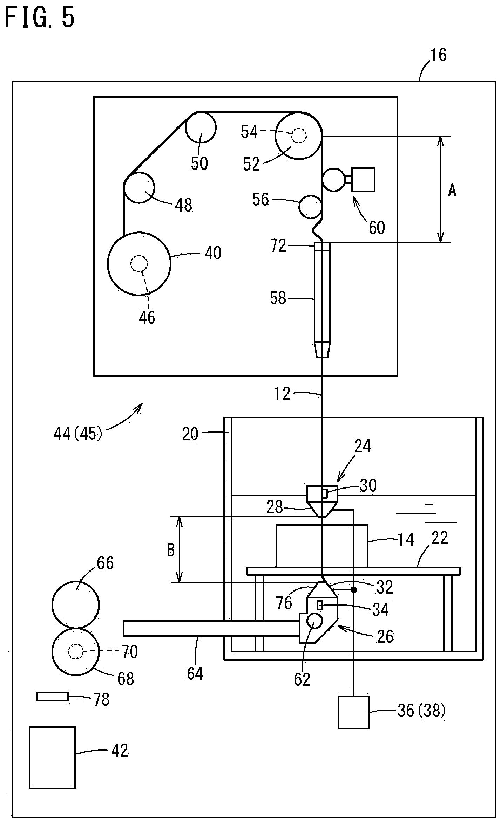

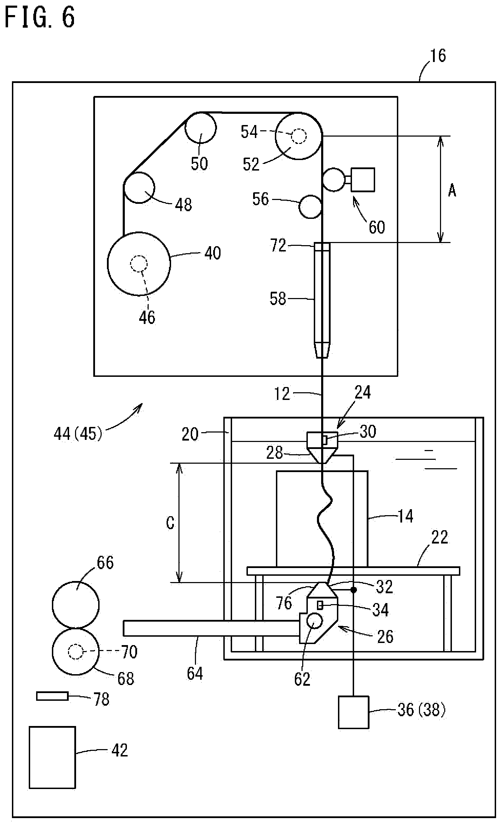

FIG. 5 is a schematic diagram of the main machine body 16, showing a state in which the tip of the wire electrode 12 touches the exterior of the lower nozzle 32 and the wire electrode 12 bends when the workpiece 14 is thin (less than 150 [mm]). FIG. 6 is a schematic diagram of the main machine body 16, showing a state in which the tip of the wire electrode 12 touches the exterior of the lower nozzle 32 and the wire electrode 12 bends when the workpiece 14 is thick (150 [mm] or more).

When auto wire feeding fails and the tip of the wire electrode 12 abuts against the exterior of the lower nozzle 32, movement of the tip of the wire electrode 12 is restricted, and as a result, the wire electrode 12 bends when the wire electrode 12 continues to be fed from the bobbin 40. The wire electrode 12 is likely to bend in a longer one of the segments of the wire electrode 12 between two adjacent support points supporting the wire electrode 12.

When the workpiece 14 is thin (less than 150 [mm]), the length, designated at A, of the wire electrode 12 between the brake roller 52 and the flexure detector 72 is greater than the length, designated at B, of the wire electrode 12 between the upper wire guide 24 and the lower wire guide 26, as shown in FIG. 5. Therefore, the wire electrode 12 is prone to bend between the guide roller 56 and the AWF pipe 58. In this case, the flexure detector 72 can detect the bending of the wire electrode 12.

When the workpiece 14 is thick (150 [mm] or more), the length A of the wire electrode 12 between the brake roller 52 and the flexure detector 72 is shorter than the length, designated at C, of the wire electrode 12 between the upper wire guide 24 and the lower wire guide 26, as shown in FIG. 6. Therefore, the wire electrode 12 is prone to bend between the upper wire guide 24 and the lower wire guide 26. In this case, the flexure detector 72 cannot detect the bending of the wire electrode 12.

However, in the present embodiment, even if the bending of the wire electrode 12 cannot be detected by the flexure detector 72, the contact detector 76 in the lower nozzle 32 can detect abutment of the tip of the wire electrode 12 against the exterior of the lower nozzle 32.

Further, when the tip of the wire electrode 12 deviates from the nozzle hole of the lower nozzle 32, the wire electrode 12 may move along the exterior of the lower nozzle 32 and move downward below the lower wire guide 26 in some cases. In this case, since the wire electrode 12 does not bend, it is impossible for the controller 18 to detect a failure of auto wire feeding from the detection signal of the flexure detector 72. On the other hand, since the contact detector 76 of the lower nozzle 32 can detect that the wire electrode 12 is in contact with the exterior of the lower nozzle 32, the controller 18 can determine that auto wire feeding has failed from the detection signal of the contact detector 76.

It should be noted that it is possible for the controller 18 to determine a failure of auto wire feeding without using the contact detector 76, when the flexure detector 72 cannot detect bending of the wire electrode 12. That is, if no detection signal is received from the AWF detector 78 even when the wire electrode 12 has been fed a predetermined length or more from the bobbin 40 after start of auto wire feeding, the controller 18 determine that the auto wire feeding has failed. The predetermined length may be designated in conformity with the length from the upper wire guide 24 to the AWF detector 78 on the running path of the wire electrode 12.

However, in this case, there is a concern that it takes long time to complete auto wire feeding because the length of the wire electrode 12 to be rewound becomes long. In the present embodiment, the controller 18 can determine failure of auto wire feeding when the wire electrode 12 touches the exterior of the lower nozzle 32, based on the detection signal from the contact detector 76. Thus, it is possible to shorten the rewinding length of the wire electrode 12.

Further, the present embodiment is configured such that when the contact detector 76 detects contact of the wire electrode 12 with the exterior of the lower nozzle 32, the wire electrode 12 is rewound until the contact detector 76 no longer detects contact of the wire electrode 12 with the exterior of the lower nozzle 32. As a result, rewinding of the wire electrode 12 is performed until the tip of the wire electrode 12 is returned to a position just before the insertion position of the wire electrode 12 into the nozzle hole of the lower nozzle 32, so that the rewinding length of the wire electrode 12 can be shortened. In addition, the tip of the wire electrode 12 can be positioned near the nozzle hole of the lower nozzle 32, where the suction force into the lower nozzle 32 is strong. Therefore, the tip of the wire electrode 12 can be guided along the flow of working fluid toward the nozzle hole of the lower nozzle 32, and thus the success rate of auto wire feeding can be improved.

Further, the present embodiment is configured such that when the contact detector 76 detects contact of the wire electrode 12 with the exterior of the lower nozzle 32, a predetermined length of the wire electrode 12 is rewound. Thereby, it is possible to shorten the rewinding time of the wire electrode 12.

### [Modification 1]

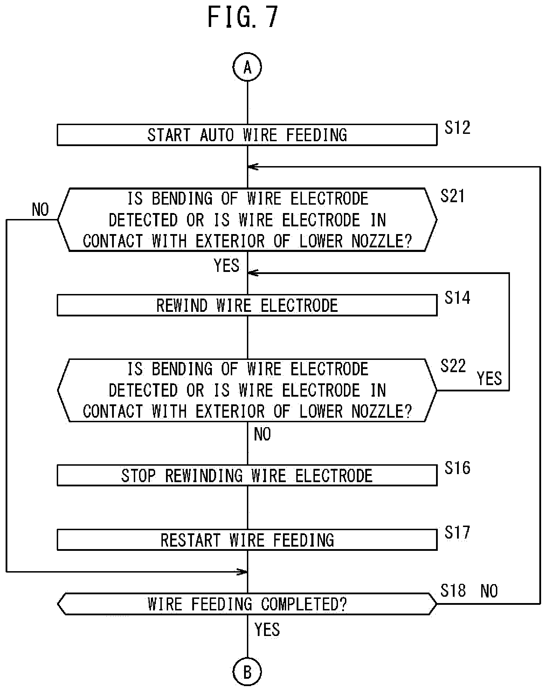

In Modification 1, the procedures at steps S13 and S15 in FIG. 3 of the first embodiment are replaced by procedures of steps S21 and S22 as described later. FIG. 7 is a flowchart showing the flow of an auto wire feeding process in the controller 18. The flow of processing from step S1 to step S11 is the same as that described with reference to the flowcharts of FIGS. 2 and 3 in the first embodiment.

At step S12, the controller 18 drives the motor 46, the motor 54 and the motor 70 to start auto wire feeding of the wire electrode 12, and the control advances to step S21.

At step S21, the controller 18 determines whether or not the wire electrode 12 is subjected to bending, based on the presence or absence of a detection signal from the flexure detector 72, or determines whether or not the wire electrode 12 is in contact with the exterior of the lower nozzle 32, based on the presence or absence of a detection signal from the contact detector 76. If the wire electrode 12 is subjected to bending or the wire electrode 12 is in contact with the exterior of the lower nozzle 32, the control proceeds to step S14. When the wire electrode 12 is neither subjected to bending nor in contact with the exterior of the lower nozzle 32, the control proceeds to step S18.

At step S14, the controller 18 drives the motor 46 and the motor 54 to rewind the wire electrode 12, and the control proceeds to step S22.

At step S22, the controller 18 determines whether or not the wire electrode 12 is subjected to bending, based on the presence or absence of a detection signal from the flexure detector 72 or determines whether or not the wire electrode 12 is in contact with the exterior of the lower nozzle 32, based on the presence or absence of a detection signal from the contact detector 76. If the wire electrode 12 is subjected to bending or the wire electrode 12 is in contact with the exterior of the lower nozzle 32, the control returns to step S14. When the wire electrode 12 is neither subjected to bending nor in contact with the exterior of the lower nozzle 32, the control proceeds to step S16.

The processing flow from step S16 to step S18 is the same as the processing flow described with reference to the flowcharts of FIGS. 2 and 3 in the first embodiment.

### [Modification 2]

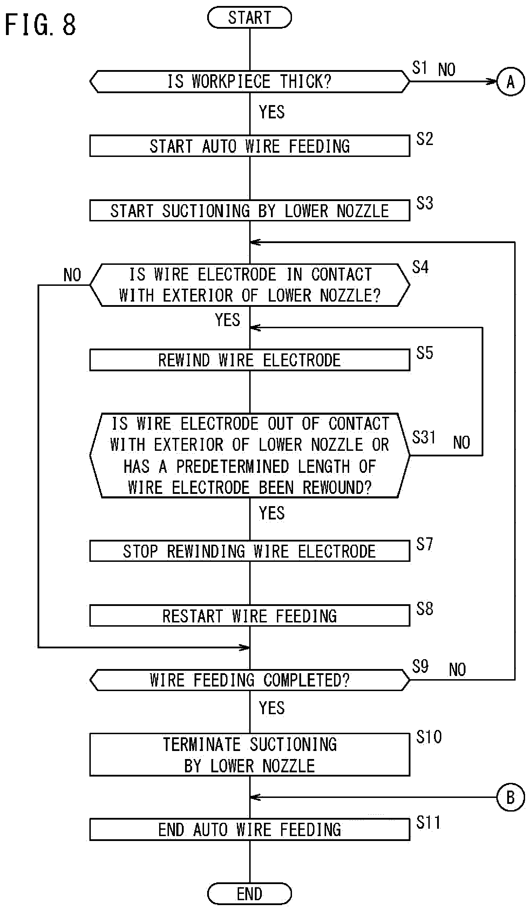

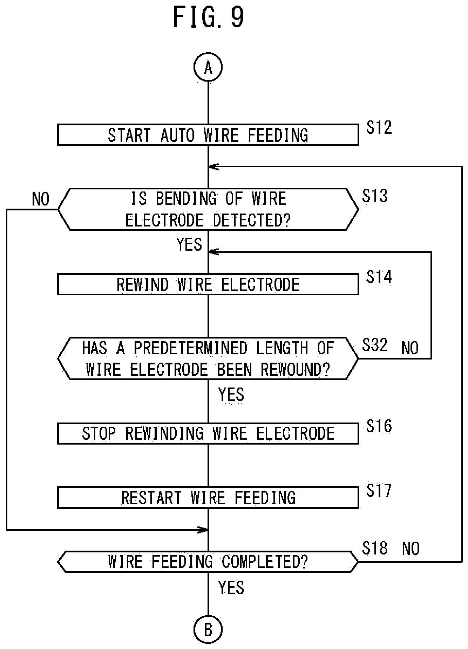

In Modification 2, the procedures at step S6 in FIG. 2 and step S15 in FIG. 3 of the first embodiment are replaced by procedures of step S31 and step S32 as described later. FIGS. 8 and 9 are flowcharts showing the flow of an auto wire feeding process in the controller 18.

The processing flow at steps S1 to S4 is the same as that described with reference to the flowcharts of FIGS. 2 and 3 in the first embodiment. At step S5, the controller 18 drives the motor 46 and the motor 54 to rewind the wire electrode 12, and the control proceeds to step S31.

At step S31, the controller 18 determines whether or not the wire electrode 12 is out of contact with the exterior of the lower nozzle 32, based on the presence or absence of a detection signal from the contact detector 76, or determines whether or not a predetermined length of the wire electrode 12 has been rewound, based on the amount of rewinding of the motor 54 of the brake roller 52. When the wire electrode 12 is out of contact with the exterior of the lower nozzle 32 or when a predetermined length of the wire electrode 12 has been rewound, the control proceeds to step S7. When the wire electrode 12 is in contact with the exterior of the lower nozzle 32 and a predetermined length of the wire electrode 12 has not yet been rewound, the control returns to step S5.

The processing flow from step S7 to step S13 is the same as the processing flow described with reference to the flowcharts of FIGS. 2 and 3 in the first embodiment. At step S14, the controller 18 drives the motor 46 and the motor 54 to rewind the wire electrode 12, and the control proceeds to step S32.

At step S32, the controller 18 determines whether or not a predetermined length of the wire electrode 12 has been rewound, based on the amount of rewinding of the motor 54 of the brake roller 52. When a predetermined length of the wire electrode 12 has been rewound, the control proceeds to step S16. When a predetermined length of the wire electrode 12 has not yet been rewound, the control returns to step S14.

The processing flow from step S16 to step S18 is the same as the processing flow described with reference to the flowcharts of FIGS. 2 and 3 in the first embodiment.

### [Technical Concepts Obtained from Embodiment]

Technical concepts that can be grasped from the above embodiment will be described below.

In the auto wire feeding method for performing auto wire feeding of the wire electrode (12) in the wire electrical discharge machine (10), the wire electrical discharge machine (10) includes: the work-pan (20) configured to store working fluid; the table (22) disposed in the work-pan (20), the workpiece (14) being placed on the table (22); the lower nozzle (32) disposed under the table (22) and having the nozzle hole into which the wire electrode (12) is inserted; the contact detector (76) disposed at the lower nozzle (32) and configured to detect contact of the wire electrode (12) with the exterior of the lower nozzle (32); the suction unit (38) configured to suction working fluid into the lower nozzle (32); and the wire feeding mechanism (45) configured to pass the wire electrode (12) through the machining hole in the workpiece (14) and feed the wire electrode (12) toward the lower nozzle (32). The auto wire feeding method may include the steps of: when auto wire feeding is performed with the work-pan (20) containing working fluid, feeding the wire electrode (12) toward the lower nozzle (32) by the wire feeding mechanism (45) while suctioning the working fluid into the lower nozzle (32) by the suction unit (38); and rewinding the wire electrode (12) by the wire feeding mechanism (45) when the contact detector (76) detects contact of the wire electrode (12) with the exterior of the lower nozzle (32). With this method, it is possible to shorten the time required to complete the auto wire feeding of the wire electrode (12).

In the above auto wire feeding method, when the thickness of the workpiece (14) is 150 [mm] or more and when auto wire feeding is performed with the work-pan (20) containing working fluid, the wire electrode (12) may be fed toward the lower nozzle (32) by the wire feeding mechanism (45) while the suction unit (38) may suction the working fluid into the lower nozzle (32), and the wire electrode (12) may be rewound by the wire feeding mechanism (45) when the contact detector (76) detects contact of the wire electrode (12) with the exterior of the lower nozzle (32). This makes it possible to shorten the time required to complete the auto wire feeding of the wire electrode (12).

In the above auto wire feeding method, when the thickness of the workpiece (14) is 200 [mm] or more and when auto wire feeding is performed with the work-pan (20) containing working fluid, the wire electrode (12) may be fed toward the lower nozzle (32) by the wire feeding mechanism (45) while the suction unit (38) may suction the working fluid into the lower nozzle (32), and the wire electrode (12) may be rewound by the wire feeding mechanism (45) when the contact detector (76) detects contact of the wire electrode (12) with the exterior of the lower nozzle (32). This makes it possible to shorten the time required to complete the auto wire feeding of the wire electrode (12).

In the above auto wire feeding method, when the contact detector (76) detects contact of the wire electrode (12) with the exterior of the lower nozzle (32), the wire electrode (12) may be rewound until the contact detector (76) no longer detects contact of the wire electrode (12) with the exterior of the lower nozzle (32). As a result, it is possible to shorten the time required to complete the auto wire feeding of the wire electrode (12).

In the above auto wire feeding method, a predetermined length of the wire electrode (12) may be rewound when the contact detector (76) detects contact of the wire electrode (12) with the exterior of the lower nozzle (32). Thereby, it is possible to shorten the rewinding time of the wire electrode (12).

The wire electrical discharge machine (10) includes: the work-pan (20) configured to store working fluid; the table (22) disposed in the work-pan (20), a workpiece (14) being placed on the table (22); the lower nozzle (32) disposed under the table (22) and having the nozzle hole into which the wire electrode (12) is inserted; the contact detector (76) disposed at the lower nozzle (32) and configured to detect contact of the wire electrode (12) with the exterior of the lower nozzle (32); the suction unit (38) configured to suction working fluid into the lower nozzle (32); the wire feeding mechanism (45) configured to pass the wire electrode (12) through the machining hole in the workpiece (14) and feed the wire electrode (12) toward the lower nozzle (32); and the auto wire feeding control unit (19) configured to, when auto wire feeding is performed with the work-pan (20) containing working fluid, control the wire feeding mechanism (45) to feed the wire electrode (12) toward the lower nozzle (32) while controlling the suction unit (38) to suction the working fluid into the lower nozzle (32), and further configured to, when the contact detector (76) detects contact of the wire electrode (12) with the exterior of the lower nozzle (32), control the wire feeding mechanism (45) to rewind the wire electrode (12). This configuration makes it possible to shorten the time required to complete the auto wire feeding of the wire electrode (12) .

The above wire electrical discharge machine (10) may be configured such that, when the contact detector (76) detects contact of the wire electrode (12) with the exterior of the lower nozzle (32), the auto wire feeding control unit (19) controls the wire feeding mechanism (45) to rewind the wire electrode (12) until the contact detector (76) no longer detects contact of the wire electrode (12) with the exterior of the lower nozzle (32). As a result, it is possible to shorten the time required to complete the auto wire feeding of the wire electrode (12).

## Claims

1. An auto wire feeding method for performing auto wire feeding of a wire electrode (12) in a wire electrical discharge machine (10),
the wire electrical discharge machine comprising:
a work-pan (20) configured to store working fluid;
a table (22) disposed in the work-pan, a workpiece (14) being placed on the table (22);
a lower nozzle (32) disposed under the table and having a nozzle hole into which the wire electrode (12) is inserted;
a contact detector (76) disposed at the lower nozzle and configured to detect contact of the wire electrode with an exterior of the lower nozzle;
a suction unit (38) configured to suction working fluid into the lower nozzle; and
a wire feeding mechanism (45) configured to pass the wire electrode through a machining hole in the workpiece and feed the wire electrode toward the lower nozzle,
the auto wire feeding method comprising the steps of:
when auto wire feeding is performed with the work-pan containing working fluid,
feeding the wire electrode toward the lower nozzle by the wire feeding mechanism while suctioning the working fluid into the lower nozzle by the suction unit; and
rewinding the wire electrode by the wire feeding mechanism when the contact detector detects contact of the wire electrode with the exterior of the lower nozzle.

2. The auto wire feeding method according to claim 1, wherein, when the thickness of the workpiece is 150 [mm] or more and when auto wire feeding is performed with the work-pan containing working fluid, the wire electrode is fed toward the lower nozzle by the wire feeding mechanism while the suction unit suctions the working fluid into the lower nozzle, and the wire electrode is rewound by the wire feeding mechanism when the contact detector detects contact of the wire electrode with the exterior of the lower nozzle.

3. The auto wire feeding method according to claim 1, wherein, when the thickness of the workpiece is 200 [mm] or more and when auto wire feeding is performed with the work-pan containing working fluid, the wire electrode is fed toward the lower nozzle by the wire feeding mechanism while the suction unit suctions the working fluid into the lower nozzle, and the wire electrode is rewound by the wire feeding mechanism when the contact detector detects contact of the wire electrode with the exterior of the lower nozzle.

4. The auto wire feeding method according to claim 1 or 2, wherein, when the contact detector detects contact of the wire electrode with the exterior of the lower nozzle, the wire electrode is rewound until the contact detector no longer detects contact of the wire electrode with the exterior of the lower nozzle.

5. The auto wire feeding method according to claim 1 or 2, wherein a predetermined length of the wire electrode is rewound when the contact detector detects contact of the wire electrode with the exterior of the lower nozzle.

6. A wire electrical discharge machine (10) comprising:
a work-pan (20) configured to store working fluid;
a table (22) disposed in the work-pan, a workpiece (14) being placed on the table (22);
a lower nozzle (32) disposed under the table and having a nozzle hole into which a wire electrode (12) is inserted;
a contact detector (76) disposed at the lower nozzle and configured to detect contact of the wire electrode with an exterior of the lower nozzle;
a suction unit (38) configured to suction working fluid into the lower nozzle;
a wire feeding mechanism (45) configured to pass the wire electrode through a machining hole in the workpiece and feed the wire electrode toward the lower nozzle; and
an auto wire feeding control unit (19) configured to, when auto wire feeding is performed with the work-pan containing working fluid, control the wire feeding mechanism to feed the wire electrode toward the lower nozzle while controlling the suction unit to suction the working fluid into the lower nozzle, and further configured to, when the contact detector detects contact of the wire electrode with the exterior of the lower nozzle, control the wire feeding mechanism to rewind the wire electrode.

7. The wire electrical discharge machine according to claim 6, wherein, when the contact detector detects contact of the wire electrode with the exterior of the lower nozzle, the auto wire feeding control unit controls the wire feeding mechanism to rewind the wire electrode until the contact detector no longer detects contact of the wire electrode with the exterior of the lower nozzle.
